# EUROPÄISCHE PATENTSCHRIFT

(11) **EP 4 230 880 B1**
(45) Veröffentlichungstag und Bekanntmachung des Hinweises auf die Patenterteilung: **22.01.2025**
(21) Anmeldenummer: 23157197.7
(22) Anmeldetag: 17.02.2023
(51) Int. Cl.: F16B 5/06, F16B 21/06, F16B 21/08

(54) **SIGNALGEBER ZUR ABGABE EINES LICHTSIGNALS**
SIGNAL GENERATOR FOR EMITTING A LIGHT SIGNAL
GÉNÉRATEUR DE SIGNAUX POUR ÉMETTRE UN SIGNAL LUMINEUX

(30) Priorität: 17.02.2022 DE 102022201660
(43) Veröffentlichungstag der Anmeldung: 23.08.2023
(73) Patentinhaber: Yunex GmbH, 81739 München (DE)
(72) Erfinder: Fischer, Friedrich, 83737 Irschenberg (DE)
(74) Vertreter: Patentanwaltskanzlei WILHELM & BECK

(56) Entgegenhaltungen:
- WO-A1-2022/028962
- DE-A1- 102017 120 446
- DE-A1- 2 131 433
- DE-U1- 202008 007 099

## Beschreibung

Die Erfindung betrifft einen Signalgeber zur Abgabe eines Lichtsignals, insbesondere für den Straßenverkehr, nach dem Oberbegriff des Patentanspruches 1.

Lichtsignalanlagen dienen der Steuerung des Straßenverkehrs an einem Knotenpunkt des Straßennetzes, insbesondere an Kreuzungen oder Einmündungen. Sie umfassen an Masten oder Kettenwerken befestigte Signalgeber zur Abgabe von Lichtsignalen an sich dem Knotenpunkt nähernde sowie an dort wartende Verkehrsteilnehmer, etwa an Führer von Kraftfahrzeugen oder Krafträdern, aber auch an Radfahrer und Fußgänger. Ein Signalgeber weist ein oder mehrere aneinandergereihte Signalfelder auf, von welchen jedes ein Lichtzeichen abgeben kann. Häufig kommen dreifeldige Signalgeber vor, deren Signalfelder übereinander angeordnet sind. Dabei kann das obere Signalfeld ein rotes Lichtzeichen, das mittlere Signalfeld ein gelbes Lichtzeichen und das untere Signalfeld ein grünes Lichtzeichen abgeben. Die Dauer und Abfolge der abzugebenden Lichtsignale werden durch Ansteuerung einzelner oder mehrerer Signalfelder gemäß einem in einem Steuergerät der Lichtsignalanlage ablaufenden Signalzeitenplan bestimmt.

Signalgeber der eingangs genannten Art sind in der Straßenverkehrstechnik seit langem bekannt. Sie umfassen ein frontseitig offenes Außengehäuse, in welchem eine Lichtquelle angeordnet ist. Das Außengehäuse ist frontseitig durch eine Frontabdeckung mit einer Lichtaustrittöffnung verschlossen. In der Lichtaustrittsöffnung ist ein Optikaufsatz zur Beeinflussung des von der Lichtquelle abgegebenen und durch die Lichtaustrittsöffnung austretenden Lichts angeordnet. Zur lösbaren Verbindung der Frontabdeckung mit dem Außengehäuse ist eine Rastverbindung vorgesehen. Dabei weist die Frontabdeckung einen federelastisch auslenkbaren Rastarm mit einer angeformten Rastnase und das Außengehäuse eine Rasttasche auf, in welche die Rastnase des unausgelenkten Rastarms eingeschnappt ist.

Solche Rastverbindungen sind beispielsweise bei dem aus der Offenlegungsschrift DE 21 31 433 A bekannten Lichtsignalgeber vorgesehen. Die Frontabdeckung ist dabei als Fronttür ausgebildet, die mit den Rastarmen und mit als Lagerzapfen ausgebildeten Haltegliedern in einem Stück gefertigt ist und aus elastisch verformbarem Material besteht. Die Rasttaschen sind als Durchbrüche im Außengehäuse ausgebildet, in die die Rastarme einrasten, wobei angeformte Verriegelungsglieder den Rand des jeweiligen Durchbruches hakenförmig umgreifen. Die Lagerzapfen sind jeweils in einer Lagerbohrung im Außengehäuse drehbar gelagert, so dass die Fronttür nach Öffnen der Rastverbindung verschwenkbar ist. Die Rastarme sind auf einer Leiste mit verringertem Querschnitt angeordnet.

Zum Öffnen der Rastverbindung wird ein Werkzeug, beispielweise ein Schraubenzieher, derart zwischen die Gehäusewand und die Leiste geschoben, dass diese deformiert wird und dabei die Rastarme aus den Durchbrüchen herauszieht. Durch die über Reibung auftretende Torsion der Leiste werden dabei gleichzeitig die Verriegelungsglieder über den Rand der Durchbrüche gezogen und außer Eingriff gebracht. Sobald dann die Rastarme ganz aus den Durchbrüchen entfernt sind, kann die Fronttür geöffnet werden.

Durch das Ansetzen eines Schraubenziehers können Außengehäuse und/oder Fronttür im Bereich der Rastverbindung verkratzt werden. Die erforderliche Torsionsbewegung muss richtig dosiert werden, um dabei die Rastarme oder die Leiste der Fronttür nicht zu beschädigen. Das Öffnen erfordert Geschick, da die Torsion aufrechterhalten werden muss, während gleichzeitig die Fronttür aufgeschwenkt wird.

Aus DE 20 2008 007 099 U1 ist ein Rastelement zur Fixierung und zum Abnehmen einer Abdeckplatte für die Gehäusestruktur eines Computers bekannt.

DE 10 2017 0120 446 A1 offenbart einen Clipverbinder zur vereinfachten Lösbarkeit einer Clipverbindung bei Bauteilen eines Kraftfahrzeugs.

Aus WO 2022/028962 A1 ist ein Befestigungssystem für zwei Teile mit einem Verriegelungselement bekannt. Dabei ermöglicht das Verriegelungselement eine Verriegelung des Befestigungssystems.

Der Erfindung liegt daher die Aufgabe zugrunde, einen Signalgeber der eingangs genannten Art bereitzustellen, dessen Frontabdeckung einfacher zu öffnen ist.

Die Aufgabe wird erfindungsgemäß gelöst durch einen gattungsgemäßen Signalgeber mit den im kennzeichnenden Teil des Patentanspruches 1 angegebenen Merkmalen.

Demnach umfasst ein Signalgeber zur Abgabe eines Lichtsignals, insbesondere für den Straßenverkehr, ein frontseitig offenes Außengehäuse. Das Außengehäuse kann beispielsweise aus Kunststoff oder Aluminium bestehen. In dem Außengehäuse ist eine Lichtquelle angeordnet, beispielsweise eine oder mehrere Leuchtdioden mit einer als Treiberbaugruppe ausgebildeten Energieversorgung. Das Außengehäuse ist frontseitig durch eine Frontabdeckung mit einer oder auch mehreren Lichtaustrittöffnungen verschlossen. Eine Lichtaustrittsöffnung weist jeweils einen Optikaufsatz auf, um das von der Lichtquelle abgegebene und durch die Lichtaustrittsöffnung austretende Licht zu beeinflussen. Ein Optikaufsatz kann beispielsweise eine Fresnellinse zur Bündelung des Lichts, eine Streuscheibe zur gleichmäßigen Ausleuchtung des Signalfelds sowie optional eine Symbolmaske zur Darstellung eines Sinnbildes, wie Fußgänger, Radfahrer oder Pfeil, aufweisen. Zur lösbaren Verbindung der Frontabdeckung mit dem Außengehäuse ist eine Rastverbindung an einer, vorzugsweise an mehreren Stellen vorgesehen. An der Stelle einer Rastverbindung weist die Frontabdeckung einen federelastisch auslenkbaren Rastarm mit einer angeformten Rastnase und das Außengehäuse eine Rasttasche auf, in welche die Rastnase des unausgelenkten Rastarms eingeschnappt ist.

Erfindungsgemäß weist die Frontabdeckung ein verschiebbar angeordnetes Entriegelungselement zum Öffnen der Rastverbindung auf, welches zwischen einer Verriegelungsposition und einer Entriegelungsposition verschiebbar ausgebildet ist. In der Verriegelungsposition ist der Rastarm unausgelenkt. Bei aufgesetzter Frontabdeckung ragt dabei die Rastnase in die Rasttasche des Außengehäuses. In der Entriegelungsposition ist der Rastarm durch das Entriegelungselement ausgelenkt, wodurch die Rastnase aus der Rasttasche gezogen ist. Durch Verschieben des in die Frontabdeckung integrierten Entriegelungselements ist die Rastverbindung einfach und beschädigungsfrei zu öffnen, wofür auch kein zusätzliches Spezialwerkzeug erforderlich ist.

In einer vorteilhaften Ausführungsform des erfindungsgemäßen Signalgebers weisen das Entriegelungselement elementseitige Führungsmittel und die Frontabdeckung abdeckungsseitige Führungsmittel auf, die derart zusammenwirken, dass diese eine Verschieberichtung bestimmen, entlang der das Entriegelungselement zwischen Verriegelungsposition und Entriegelungsposition linear verschiebbar ist. Die Führungsmittel gewährleisten eine definierte Verschieberichtung für das Entriegelungselement, die ein schnelles und Material schonendes Öffnen der Rastverbindung ermöglichen.

In einer weiteren vorteilhaften Ausführungsform des erfindungsgemäßen Signalgebers ist der Rastarm durch einen Wandabschnitt der Frontabdeckung gebildet, wobei die Frontabdeckung entlang von Abschnittsgrenzen des Wandabschnitts verlaufende Sollbiegestellen aufweist. Damit können Freischnitte in der Frontabdeckung vermieden werden, um eine Auslenkbarkeit des Rastarms zu ermöglichen. Ein freigeschnittener Rastarm würde Materialermüdungen an der nicht freigeschnittenen Verbindungsstelle zum angrenzenden Wandabschnitt der Frontabdeckung begünstigen, was in dieser Ausführungsform aber verhindert wird. Freischnitte erlauben auch einen Durchtritt von Feuchtigkeit und Schmutz. Die Sollbiegestellen können einfach dadurch eine Querschnittsverringerung an den Abschnittsgrenzen des Wandabschnittes bereitgestellt werden. Beispielsweise können die Sollbiegestellen durch zwei innenseitig in der Frontabdeckung liegende, parallel verlaufende Nuten gebildet sein. Dadurch bleibt die Frontabdeckung im Bereich des Rastarms außenseitig glatt und ohne Unterbrechungen.

In einer weiteren vorteilhaften Ausführungsform des erfindungsgemäßen Signalgebers weist das Außengehäuse eine Keilfläche auf, die relativ zum unausgelenkten Rastarm mit einem Neigungswinkel ansteigend angeordnet ist, wobei das Entriegelungselement eine Gegenfläche aufweist, die derart an der Keilfläche anliegt, dass der Rastarm bei Verschiebung des Entriegelungselements in Richtung Entriegelungsposition auslenkt. Durch eine Verschiebung der Keilfläche auf der Gegenfläche lenkt das Entriegelungselement bei Translation in Verschieberichtung den Rastarm quer zur Verschieberichtung aus. Das Ausmaß der Auslenkung kann durch die Größe des Neigungswinkels der Keilfläche und die Länge der Verschiebungsstrecke vorgegeben werden.

Vorzugsweise ist die Gegenfläche des Entriegelungselements relativ zum unausgelenkten Rastarm mit dem Neigungswinkel fallend angeordnet, also ebenfalls keilförmig mit entsprechender Gegenneigung ausgebildet. Als Neigungswinkel können beispielsweise 30° zur Verschieberichtung gewählt werden. So gleitet beim Verschieben des Entriegelungselements die ebene Gegenfläche auf der ebenen Keilfläche des Außengehäuses, wodurch eine definierte Relativbewegung ohne Verkippen oder Verkanten des Entriegelungselements erreicht wird.

In einer weiteren vorteilhaften Ausführungsform des erfindungsgemäßen Signalgebers ist die Rastnase derart am Rastarm angeformt, dass sie ein Verschieben des Entriegelungselements bei Erreichen der Entriegelungsposition begrenzt. Schlägt das Entriegelungselement beim Verschieben an die Rastnase des Rastarms an, ist der Rastarms so weit ausgelenkt, dass die Rastnase nicht mehr in die Rasttasche ragt und damit die Rastverbindung gelöst ist. Die Frontabdeckung kann nun von dem Außengehäuse entfernt werden.

In einer weiteren vorteilhaften Ausführungsform des erfindungsgemäßen Signalgebers weist das Außengehäuse eine zwischen Keilfläche und Rasttasche angeordnete Haltefläche auf, gegen die das Entriegelungselement in seiner Entriegelungsposition derart durch den ausgelenkten Rastarm gepresst wird, dass das Entriegelungselement in seiner Entriegelungsposition verharrt. Solange das Entriegelungselement mit seiner Gegenfläche an der Keilfläche des Außengehäuses anliegt, könnten die federelastischen Rückstellkräfte des ausgelenkten Rastarms den Entriegelungskeil selbsttätig entgegen die Verschieberichtung, also in Richtung der Verriegelungsposition, pressen. Dies wird nach dieser Ausführungsform dadurch verhindert, dass in der Entriegelungsposition das Entriegelungselement nicht mehr mit seiner Gegenfläche an die Keilfläche, sondern an eine der Keilfläche nachgeordnete Haltefläche gepresst wird. Die Haltefläche weist eine geringere oder gar keine Neigung gegenüber der Verschieberichtung auf. Daher verharrt das Entriegelungselement bei Anschlag an die Rastnase in der erreichten Entriegelungsposition. Damit ist es möglich, an mehreren Stellen zwischen Frontabdeckung und Außengehäuse angeordnete Rastverbindungen nacheinander zu lösen, ohne dass diese selbsttätig wieder einrasten.

In einer weiteren vorteilhaften Ausführungsform des erfindungsgemäßen Signalgebers weist die Frontabdeckung eine Montageöffnung auf, durch die das Entriegelungselement von außen in seine Verrieglungsposition eingeschoben ist. Das Entriegelungselement kann von der übrigen Frontabdeckung getrennt hergestellt werden, beispielsweise als Kunststoffspritzgussteile. Das Entriegelungselement wird dann durch die Montageöffnung eingeführt und - durch die Führungsmittel geführt - in die Verriegelungsposition geschoben. Die derart vormontierte Frontabdeckung kann nun auf das Außengehäuse aufgesetzt werden. Sobald dabei die Rastnasen die Keilfläche des Außengehäuses kontaktieren, werden die Rastarme zunehmend ausgelenkt. Die Rastnasen gleiten über die Haltefläche des Außengehäuses bis sie in die Rasttaschen einschnappen. Die Rastverbindungen sind nun geschlossen, die Frontabdeckung verschließt das Außengehäuse. Während dieses Vorgangs bleibt das eingeschobene Entriegelungselement in seiner Verriegelungsposition.

In einer weiteren vorteilhaften Ausführungsform des erfindungsgemäßen Signalgebers weist das Entriegelungselement ein Rückhalteelement auf, welches ein Verschieben des Entriegelungselements aus der Verriegelungsposition durch die Montageöffnung blockiert. Damit bei abgenommener Frontabdeckung das Entriegelungselement nicht durch die Montageöffnung wieder herausfällt, weist es ein beispielsweise als Federzunge ausgebildetes Rückhalteelement auf. Die Federzunge wird beim Durchführen des Entriegelungselements durch die Montageöffnung aus einer ausgestellten Ruhelage ausgelenkt und stellt sich bei Erreichen der Verriegelungsposition wieder in die Ruhelage zurück, in der die Federzunge so weit ausgestellt ist, dass sie beim Zurückschieben in Richtung Montageöffnung von Innen gegen die Frontabdeckung stößt. Durch die Führungsmittel, die Rastnase und das Rückhalteelement ist das Entriegelungselement sicher gegen ein Herausfallen und damit gegen Verlust geschützt.

In einer weiteren vorteilhaften Ausführungsform des erfindungsgemäßen Signalgebers weist das Entriegelungselement an seiner der Montageöffnung zugewandten Rückseite eine Vertiefung zum Ansetzen eines Schiebewerkzeugs auf. Die Verschiebung des Entriegelungselements von der Verriegelungsposition zur Entriegelungsposition kann mit einem beliebigen Schiebewerkzeug vermittelt werden, solange dieses einen durch die Montageöffnung passenden Endabschnitt aufweist, wie zum Beispiel ein Stift, ein Schraubendreher, ein Flachzangenschenkel, und der gleichen. Damit das Verschiebewerkzeug beim Ansetzen an das Entriegelungselement seitlich nicht abrutscht, weist das Entriegelungselement an seiner Rückseite eine Vertiefung auf.

Weitere Vorteile und Eigenschaften des erfindungsgemäßen Signalgebers ergeben sich aus nachfolgender Beschreibung der Zeichnungen, in deren
- FIG 1: ein Feld eines erfindungsgemäßen Signalgebers in perspektivischer Ansicht,
- FIG 2: ein horizontaler Teilschnitt durch das Außengehäuse des Signalgebers aus FIG 1,
- FIG 3: eine perspektivische Innenansicht der Frontabdeckung des Signalgebers aus FIG 1 mit unmontiertem Entriegelungselement,
- FIG 4: die Innenansicht gemäß FIG 3 mit montiertem Entriegelungselement und
- FIG 5: ein horizontaler Teilschnitt durch den Signalgeber aus FIG 1 mit eingerasteter Frontabdeckung
schematisch veranschaulicht sind.

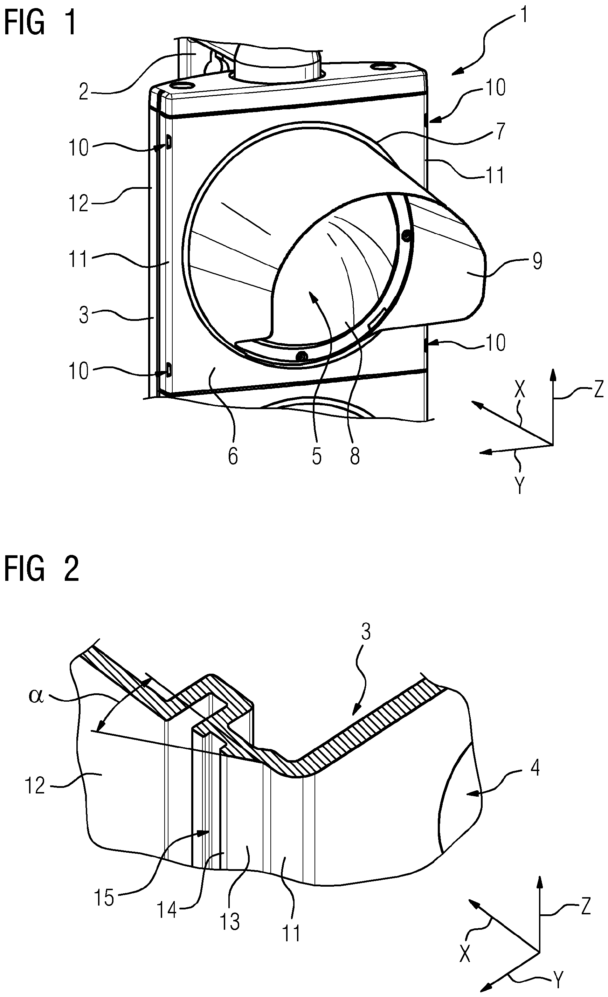

Gemäß FIG 1 ist ein Signalgeber 1 dazu ausgebildet und vorgesehen, ein Lichtsignal an Verkehrsteilnehmer des Straßenverkehrs abzugeben. Der dargestellte Signalgeber 1 ist Teil einer an sich bekannten Lichtsignalanlage, welche den Straßenverkehr an einem Knotenpunkt eines Straßennetzes regelt. Dazu werden an sich dem Knotenpunkt nähernde oder an einer Haltelinie des Knotenpunkts wartende Verkehrsteilnehmer Sperr- und Freigabesignale in Form von Lichtzeichen abgegeben. In FIG 1 ist beispielsweise der Signalgeber 1 des obersten von zwei oder drei in Hochrichtung Z übereinander angeordneten und Signalfeldern dargestellt, der als Sperrsignal ein rotes Lichtzeichen abgeben kann. Die Signalfelder können mittels einer Befestigungseinrichtung 2 beispielsweise an einem Mast am Knotenpunkt aufgestellt sein.

Den Signalgebern 1 aller Signalfelder ist gemein, dass sie gemäß FIG 2 ein frontseitig offenes Außengehäuse 3 umfassen, welches beispielsweise aus Aluminium oder einem witterungsbeständigen Kunststoff gefertigt ist. Eine Vorderwand des Au-βengehäuses 3 weist eine kreisförmige Frontöffnung 4 auf, welche am Aufstellungsort des Signalgebers 1 Verkehrsteilnehmern zugewandt ist, welche sich dem Signalgeber 1 in einer Längsrichtung X - beispielsweise entlang eines Knotenpunktarmes - nähern. In dem Außengehäuse 3 ist eine an sich bekannte und daher nicht näher dargestellte Lichtquelle 5 angeordnet, beispielsweise ein oder mehrere Leuchtdioden und eine Treiberschaltung zu deren Energieversorgung. Der Signalgeber 1 umfasst ferner ein das Außengehäuse verschließende Frontabdeckung 6 mit einer Lichtaustrittöffnung 7 im Bereich der Frontöffnung 4 des Außengehäuses 3. In der Lichtaustrittsöffnung 7 ist ein Optikaufsatz 8 angeordnet, der von der Lichtquelle 5 abgegebenes und durch die Lichtaustrittsöffnung 4 austretenden Licht beeinflusst. Zur Abschirmung von Fremdlichteinflüssen ist eine vom Rand der Lichtaustrittsöffnung 7 entgegen die Längsrichtung X von der Frontabdeckung 6 abstehende Schute 9 angeordnet. Zur lösbaren Verbindung der Frontabdeckung 6 mit dem Außengehäuse 3 sind vier Rastverbindungen 10 vorgesehen, von welchen je zwei an in eine Querrichtung Y gegenüberliegenden Vorderkanten 11 des Signalgebers 1 angeordnet sind.

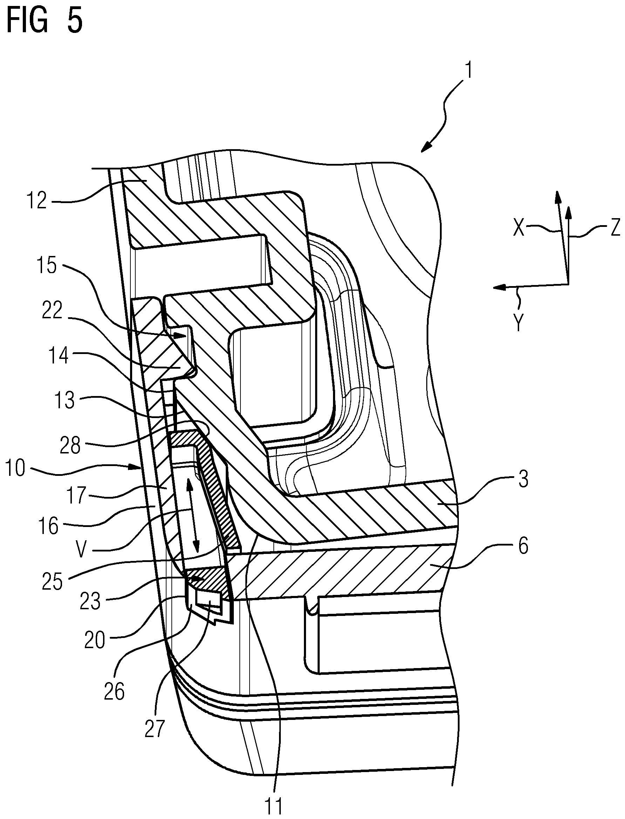

Eine der erfindungsgemäßen Rastverbindungen 10 wird nun anhand von FIG 2 bis FIG 5 näher beschrieben. Gemäß FIG 2 sto-ßen an den Vorderkanten 11 je eine Seitenwand 12 und die Vorderwand 3 des Außengehäuses 3 aneinander. Die Seitenwand 12 weist ein in Hochrichtung Z durchgängiges Profil auf, welches in Längsrichtung X ausgehend von der Vorderkante 11 zunächst eine Keilfläche 13 aufweist, welche mit einem Neigungswinkel α von beispielsweise 30° relativ zu einer Längsebene XZ ansteigt. Die Längsebene XZ wird durch Längsrichtung X und Hochrichtung Y aufgespannt. Anschließend weist die Seitenwand 12 eine Haltfläche 14 auf, welche etwa parallel zur Längsebene XZ liegt. Schließlich folgt eine Rasttasche 15, welche durch eine in Hochrichtung Z verlaufende Nut mit rechteckigem Querschnitt gebildet ist. Zu den Funktionen von Keilfläche 13, Haltefläche 14 und Rasttasche 15 des Außengehäuses 3 für die Rastverbindung 10 wird auf FIG 5 verwiesen.

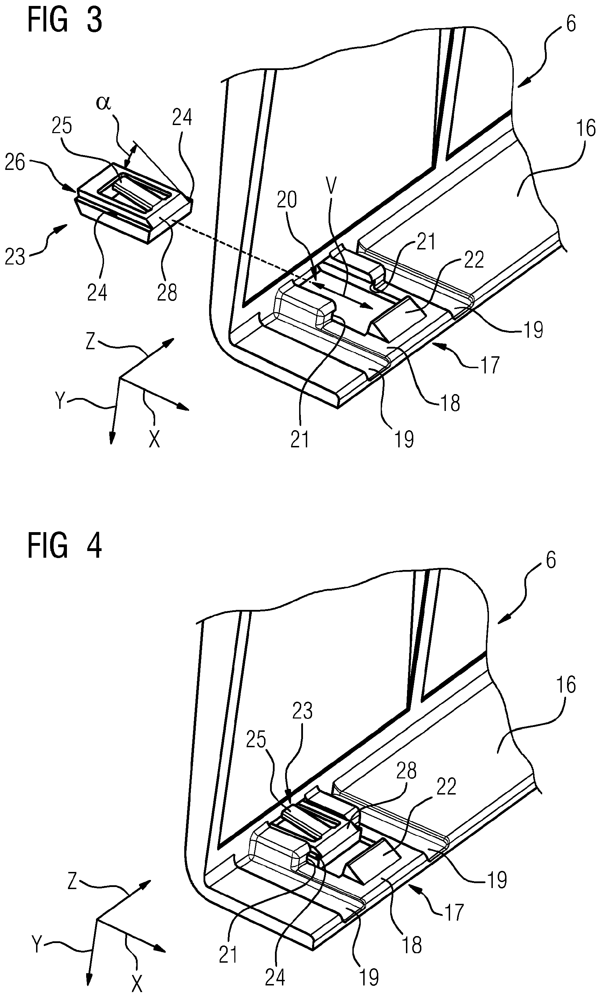

Gemäß FIG 3 und FIG 4 weist die Frontabdeckung 6, die beispielsweise aus einem witterungsbeständigen Kunststoff gebildet sein kann, an beiden Vorderkanten 11 angeformte Seitenstege 16 auf, die sich jeweils parallel zur Längsebene XZ erstrecken. Im Bereich der Rastverbindung 10 weist die Frontabdeckung 6 einen federelastisch auslenkbaren Rastarm 17 auf, der durch einen Wandabschnitt 18 des Seitenstegs 16 gebildet ist. Dazu weist der Seitensteg 16 der Frontabdeckung 6 durch in Längsrichtung X verlaufende Nuten gebildete Sollbiegestellen entlang von Abschnittsgrenzen 19 des Wandabschnitts 18 auf. Der Wandabschnitt 18 ist bei Krafteinwirkung relativ zum Rest des Seitensteges 16 in Querrichtung Y auslenkbar, da die wandstärkeschwächenden Nuten an den Abschnittsgrenzen 19 eine elastische Verformung des Seitenstegmaterials ermöglichen. An einem Ende des Rastarms 17 weist die Frontabdeckung 6 eine Montageöffnung 20 auf, deren Querschnitt mit zwei abdeckungsseitige Führungsmittel 21 bildenden Führungsnuten fluchtet. An einem der Montageöffnung 20 gegenüber liegenden Ende des Rastarms 17 ist an diesem eine Rastnase 22 angeformt, die als liegendes Dreikantprisma ausgebildet ist und zum Eingreifen in die Rasttasche 15 bemessen ist.

Die parallelen Führungsnuten 21 definieren eine Verschieberichtung V für ein Entriegelungselement 23, welches separat hergestellt und von außen durch die Montageöffnung 20 in die Frontabdeckung 6 einschiebbar ist. Dazu weist das Entriegelungselement 23 zwei elementseitige Führungsmittel 24 bildende Führungskufen auf, welche zur geführten Linearbewegung des Entriegelungselements 23 in Verschieberichtung V in den Führungsnuten gleiten. Das Entriegelungselement 23 weist ein Rückhalteelement 25 in Form einer elastischen Federzunge auf, welche beim Einschieben des Entriegelungselements 25 durch die Montageöffnung 20 ausgelenkt wird, bis dieses gemäß FIG 4 eine Verriegelungsposition erreicht hat. In der Verriegelungsposition kann sich das durch die Montageöffnung 20 hindurchgetretene Rückhalteelement 25 wieder aufstellen und spreizt sich mit seinem freien Ende gegen die Innenseite der Frontabdeckung 6. Dadurch ist das Entriegelungselement 23 gegen ein Herausgleiten aus der Frontabdeckung 6 blockiert und damit gegen Verlust gesichert. In der Verriegelungsposition schließt eine Rückseite 26 des Entriegelungselements 23 beispielsweise bündig mit der Außenseite der Frontabdeckung 6 ab.

Mit derart vormontierten Entriegelungselementen 23 kann die Frontabdeckung 6 frontseitig auf das Außengehäuse 3 des Signalgebers 1 aufgesetzt und mittels der Rastverbindungen 10 verbunden werden. Dazu wird die Frontabdeckung 6 in Längsrichtung X vorangeschoben, bis die Rastnasen 22 an den Keilflächen 13 des Außengehäuses 3 anschlagen. Durch weiteres Vorschieben der Frontabdeckung 6 bewirken die ansteigenden Keilflächen 13 ein Auslenken der Rastarme 17, bis die Rastnasen 22 nach Überstreichen der Halteflächen 14 durch die federelastische Rückstellkraft der Rastarme 17 in die Rasttaschen 15 des Außengehäuses 3 einschnappen. In dieser Verriegelungsposition sind die Rastarme 17 unausgelenkt und die in die Rasttaschen 15 eingreifenden Rastnasen 22 bilden die gewünschte formschlüssige Rastverbindung 10.

Zum Lösen der Rastverbindung 10 ist das Entriegelungselement 23 aus seiner in FIG 5 dargestellten Verriegelungsposition durch Verschiebung in Verschieberichtung V in seine Entriegelungsposition zu bewegen. Hierzu weist das Entriegelungselement 23 an seiner nach Außen weisenden Rückseite 26 eine Vertiefung 27 zum Ansetzen eines Schiebewerkzeugs, beispielsweise eines Stifts oder Schraubendrehers, auf. Das Entriegelungselement 23 weist eine Gegenfläche 28 auf, die in der Verriegelungsposition derart an der Keilfläche 13 des Außengehäuses 3 anliegt, dass der Rastarm 17 bei Verschiebung des Entriegelungselements 23 in Richtung Entriegelungsposition auslenkt. Die Gegenfläche 28 kann relativ zum unausgelenkten Rastarm 17 mit dem Neigungswinkel α fallend angeordnet sein. Die Entriegelungsposition ist erreicht, wenn das Entriegelungselement 23 beim Vorschieben an die Rastnase 22 anschlägt, die damit den Verschiebeweg für das Entriegelungselement 23 begrenzt. In der Entriegelungsposition ist der Rastarm 17 durch das Entriegelungselement 23 so weit ausgelenkt, dass die Rastnase 22 aus der Rasttasche 15 des Außengehäuses 3 gezogen ist. In der Entriegelungsposition ist das Entriegelungselement 23 derart durch den ausgelenkten Rastarm 17 gegen die Haltefläche 14 gepresst, dass es in seiner Entriegelungsposition verharrt. So können weitere Rastverbindungen entriegelt werden, ohne dass die zunächst gelöste Rastverbindung sich selbsttätig wieder verriegelt.

Mit dem integrierten Entriegelungselement 23 können Rastverbindungen 10 insbesondere auch dann einfach gelöst werden, wenn das Außengehäuse 3 nur von einer Seite, etwa von einer Frontseite des Signalgebers 1, zugänglich ist. Andere Gehäuseseiten können beispielsweise durch Anbauteile wie Kontrastblenden verdeckt sein. Zum Lösen der Rastverbindung ist auch kein Spezialwerkzeug erforderlich, sondern es können einfach stabförmige Schiebemittel am Entriegelungselement 23 angesetzt werden, ohne Gefahr die Frontabdeckung 6, das Außengehäuse 3 oder Teile der Rastverbindung 10 zu beschädigen. Insgesamt ist die Rastverbindung 10 mit integriertem Entriegelungselement 23 leicht und schnell sowie materialschonend zu öffnen.

## Patentansprüche

1. Signalgeber (1) zur Abgabe eines Lichtsignals, insbesondere für den Straßenverkehr, umfassend
- ein frontseitig offenes Außengehäuse (3),
- eine in dem Außengehäuse (3) angeordnete Lichtquelle (5),
- eine das Außengehäuse (3) verschließende Frontabdeckung (6) mit einer Lichtaustrittöffnung (7),
- ein in der Lichtaustrittsöffnung (7) angeordneter Optikaufsatz (8) zur Beeinflussung des von der Lichtquelle (5) abgegebenen und durch die Lichtaustrittsöffnung (7) austretenden Lichts, und
- eine Rastverbindung (10) zur lösbaren Verbindung der Frontabdeckung (6) mit dem Außengehäuse (3), wobei die Frontabdeckung (6) einen federelastisch auslenkbaren Rastarm (17) mit einer angeformten Rastnase (22) und das Außengehäuse (3) eine Rasttasche (15) aufweist, in welche die Rastnase (22) des unausgelenkten Rastarms (17) eingeschnappt ist,
**dadurch gekennzeichnet,**
- **dass** die Frontabdeckung (6) ein verschiebbar angeordnetes Entriegelungselement (23) zum Öffnen der Rastverbindung (10) aufweist, welches zwischen einer Verriegelungsposition, in welcher der Rastarm (17) unausgelenkt ist, und einer Entriegelungsposition, in welcher der Rastarm (17) durch das Entriegelungselement (23) ausgelenkt und die Rastnase (22) aus der Rasttasche (15) gezogen ist, verschiebbar ausgebildet ist.

2. Signalgeber (1) nach Anspruch 1,
- wobei das Entriegelungselement (23) elementseitige Führungsmittel (24) und die Frontabdeckung (6) abdeckungsseitige Führungsmittel (21) aufweisen, die derart zusammenwirken, dass diese eine Verschieberichtung (V) bestimmen, entlang der das Entriegelungselement (23) zwischen Verriegelungsposition und Entriegelungsposition linear verschiebbar ist.

3. Signalgeber (1) nach Anspruch 1 oder 2,
- wobei der Rastarm (17) durch einen Wandabschnitt (18) der Frontabdeckung (6) gebildet ist, und wobei die Frontabdeckung (6) entlang von Abschnittsgrenzen (19) des Wandabschnitts (18) verlaufende Sollbiegestellen aufweist.

4. Signalgeber (1) nach einem der Ansprüche 1 bis 3,
- wobei das Außengehäuse (3) eine Keilfläche (13) aufweist, die relativ zum unausgelenkten Rastarm (17) mit einem Neigungswinkel (α) ansteigend angeordnet ist, und
- wobei das Entriegelungselement (23) eine Gegenfläche (28) aufweist, die derart an der Keilfläche (13) anliegt, dass der Rastarm (17) bei Verschiebung des Entriegelungselements (23) in Richtung Entriegelungsposition auslenkt.

5. Signalgeber (1) nach Anspruch 4,
- wobei die Gegenfläche (28) relativ zum unausgelenkten Rastarm (17) mit dem Neigungswinkel (α) fallend angeordnet ist.

6. Signalgeber (1) nach Anspruch 4 oder 5,
- wobei die Rastnase (22) derart am Rastarm (17) angeformt ist, dass sie ein Verschieben des Entriegelungselements (23) bei Erreichen der Entriegelungsposition begrenzt.

7. Signalgeber (1) nach einem der Ansprüche 4 bis 6,
- wobei das Außengehäuse (3) eine zwischen Keilfläche (13) und Rasttasche (15) angeordnete Haltefläche (14) aufweist, gegen die das Entriegelungselement (23) in seiner Entriegelungsposition derart durch den ausgelenkten Rastarm (17) gepresst wird, dass das Entriegelungselement (23) in seiner Entriegelungsposition verharrt.

8. Signalgeber (1) nach einem der Ansprüche 1 bis 7,
- wobei die Frontabdeckung (6) eine Montageöffnung (20) aufweist, durch die das Entriegelungselement (23) von außen in seine Verrieglungsposition eingeschoben ist.

9. Signalgeber (1) nach Anspruch 8,
- wobei das Entriegelungselement (23) ein Rückhalteelement (25) aufweist, welches ein Verschieben des Entriegelungselements (23) aus der Verriegelungsposition durch die Montageöffnung (20) blockiert.

10. Signalgeber (1) nach Anspruch 8 oder 9,
- wobei das Entriegelungselement (23) an seiner der Montageöffnung (20) zugewandten Rückseite (26) eine Vertiefung (27) zum Ansetzen eines Schiebewerkzeugs aufweist.

## Claims

1. Signal generator (1) for emitting a light signal, in particular for road traffic, comprising
- an outer housing (3) open on the front side,
- a light source (5) arranged in the outer housing (3),
- a front cover (6) which closes off the outer housing (3) and has a light exit opening (7),
- an optics attachment (8), arranged in the light exit opening (7), for influencing the light which is emitted by the light source (5) and exits through the light exit opening (7), and
- a latching connection (10) for releasably connecting the front cover (6) to the outer housing (3), wherein the front cover (6) comprises a resiliently deflectable latching arm (17) with a moulded-on latching lug (22) and the outer housing (3) comprises a latching recess (15) into which the latching lug (22) of the non-deflected latching arm (17) is snapped,
**characterized**
- **in that** the front cover (6) comprises a displaceably arranged release element (23) for opening the latching connection (10), which is configured so as to be displaceable between a lock position, in which the latching arm (17) is not deflected, and a release position, in which the latching arm (17) is deflected by the release element (23) and the latching lug (22) is pulled out of the latching recess (15).

2. Signal generator (1) according to Claim 1,
- wherein the release element (23) comprises element-side guiding means (24) and the front cover (6) comprises cover-side guiding means (21), which cooperate in a manner such that they determine a displacement direction (V) along which the release element (23) is linearly displaceable between a lock position and an release position.

3. Signal generator (1) according to Claim 1 or 2,
- wherein the latching arm (17) is formed by a wall portion (18) of the front cover (6), and wherein the front cover (6) comprises predetermined bending locations extending along portion boundaries (19) of the wall portion (18).

4. Signal generator (1) according to any one of Claims 1 to 3,
- wherein the outer housing (3) comprises a wedge face (13) which is arranged to rise at an inclination angle (α) relative to the non-deflected latching arm (17), and
- wherein the release element (23) comprises a mating face (28), which rests against the wedge face (13) in such a way that the latching arm (17) is deflected in the direction of the release position when the release element (23) is displaced.

5. Signal generator (1) according to Claim 4,
- wherein the mating face (28) is arranged to drop at the inclination angle (α) relative to the non-deflected latching arm (17).

6. Signal generator (1) according to Claim 4 or 5,
- wherein the latching lug (22) is moulded on the latching arm (17) in such a way that it delimits displacement of the release element (23) when the release position has been reached.

7. Signal generator (1) according to any one of Claims 4 to 6,
- wherein the outer housing (3) comprises a holding face (14), which is arranged between the wedge face (13) and the latching recess (15) and against which the release element (23) is pressed in its release position by the deflected latching arm (17) in such a way that the release element (23) remains in its release position.

8. Signal generator (1) according to any one of Claims 1 to 7,
- wherein the front cover (6) comprises an installation opening (20) through which the release element (23) is inserted from the outside into its lock position.

9. Signal generator (1) according to Claim 8,
- wherein the release element (23) comprises a retaining element (25) which blocks the displacement of the release element (23) from the lock position through the installation opening (20).

10. Signal generator (1) according to Claim 8 or 9,
- wherein the release element (23) comprises on its rear side (26) facing the installation opening (20) a depression (27) for placing a pushing tool.

## Revendications

1. Générateur de signaux (1) destiné à émettre un signal lumineux, destiné notamment à la circulation routière, ledit générateur de signaux comprenant
- un boîtier extérieur (3) ouvert du côté avant,
- une source de lumière (5) disposée dans le boîtier extérieur (3),
- un capot avant (6) fermant le boîtier extérieur (3) et pourvu d'une ouverture de sortie de lumière (7),
- une optique rapportée (8) disposée dans l'ouverture de sortie de lumière (7) et destinée à influer sur la lumière émise par la source de lumière (5) et sortant par l'ouverture de sortie de lumière (7), et
- une liaison par encliquetage (10) destinée à relier de manière amovible le capot avant (6) au boîtier extérieur (3), le capot avant (6) comportant un bras d'encliquetage (17) orientable de manière élastique et pourvu d'un ergot d'encliquetage surmoulé (22) et le boîtier extérieur (3) comportant une poche d'encliquetage (15) dans laquelle l'ergot d'encliquetage (22) du bras d'encliquetage (17) est encliqueté,
**caractérisé en ce que**
- le capot avant (6) comporte un élément de déverrouillage (23) qui est disposé de manière coulissante, qui est destiné à ouvrir la liaison par encliquetage (10) et qui est conçu de manière à pouvoir coulisser entre une position de verrouillage, dans laquelle le bras d'encliquetage (17) n'est pas dévié, et une position de déverrouillage, dans laquelle le bras d'encliquetage (17) est dévié par l'élément de déverrouillage (23) et l'ergot d'encliquetage (22) est retiré du logement d'encliquetage (15).

2. Générateur de signaux (1) selon la revendication 1,
- l'élément de déverrouillage (23) comportant des moyens de guidage (24) côté élément et le capot avant (6) comportant des moyens de guidage (21) côté capot qui coopèrent de manière à déterminer une direction de coulissement (V) le long de laquelle l'élément de déverrouillage (23) peut coulisser linéairement entre la position de verrouillage et la position de déverrouillage.

3. Générateur de signaux (1) selon la revendication 1 ou 2,
- le bras d'encliquetage (17) étant formé par une portion de paroi (18) du capot avant (6), et le capot avant (6) comportant des points de flexion prédéterminés qui s'étendent le long de limites (19) de la portion de paroi (18).

4. Générateur de signaux (1) selon l'une des revendications 1 à 3,
- le boîtier extérieur (3) comportant une surface en coin (13) qui est disposée de manière à monter avec un angle d'inclinaison (α) par rapport au bras d'encliquetage (17) non dévié, et
- l'élément de déverrouillage (23) comportant une surface homologue (28) qui vient en appui sur la surface en coin (13) de façon à dévier le bras d'encliquetage (17) en direction de la position de déverrouillage lorsque l'élément de déverrouillage (23) coulisse.

5. Générateur de signaux (1) selon la revendication 4,
- la surface homologue (28) étant disposée de manière descendante avec l'angle d'inclinaison (α) par rapport au bras d'encliquetage (17) non dévié.

6. Générateur de signaux (1) selon la revendication 4 ou 5,
- l'ergot d'encliquetage (22) étant surmoulé sur le bras d'encliquetage (17) de façon à limiter le coulissement de l'élément de déverrouillage (23) lorsque la position de déverrouillage est atteinte.

7. Générateur de signaux (1) selon l'une des revendications 4 à 6,
- le boîtier extérieur (3) comportant une surface de retenue (14) qui est disposée entre la surface en coin (13) et la poche d'encliquetage (15) et contre laquelle l'élément de déverrouillage (23) est pressé dans sa position de déverrouillage par le bras d'encliquetage (17) dévié de telle sorte que l'élément de déverrouillage (23) reste dans sa position de déverrouillage.

8. Générateur de signaux (1) selon l'une des revendications 1 à 7,
- le capot avant (6) comportant une ouverture de montage (20) par laquelle l'élément de déverrouillage (23) est inséré depuis l'extérieur jusque dans sa position de verrouillage.

9. Générateur de signaux (1) selon la revendication 8,
- l'élément de déverrouillage (23) comportant un élément de retenue (25) qui bloque le coulissement de l'élément de déverrouillage (23) de la position de verrouillage par l'ouverture de montage (20).

10. Générateur de signaux (1) selon la revendication 8 ou 9,
- l'élément de déverrouillage (23) comportant sur son côté arrière (26) dirigé vers l'ouverture de montage (20) un évidement (27) destiné à la fixation d'un outil de poussée.
